# EUROPÄISCHE PATENTSCHRIFT

(11) **EP 1 528 201 B1**
(45) Veröffentlichungstag und Bekanntmachung des Hinweises auf die Patenterteilung: **30.08.2006**
(21) Anmeldenummer: 04024886.6
(22) Anmeldetag: 20.10.2004
(51) Int. Cl.: E05B 65/19, B60R 21/34

(54) **Vorrichtung zum Schutz von Personen bei einem Frontalaufprall auf ein Kraftfahrzeug durch Aufstellen dessen Fronthaube zumindest im frontseitigen Haubenschlossbereich**
Protecting device for pedestrian in a frontal collision with a vehicle by setting up the front blocking part of the hub.
Dispositif de protection d'une personne lors d'un choc frontal avec un véhicule par élévation du capot au moins dans la zone avant de vérouillage de celui-ci.

(30) Priorität: 29.10.2003 DE 10350534
(43) Veröffentlichungstag der Anmeldung: 04.05.2005
(73) Patentinhaber: ISE Innomotive Systems Europe GmbH, 51702 Bergneustadt (DE)
(72) Erfinder: Schulte, Michael, 57462 Olpe/Biggesee (DE)
(74) Vertreter: Fuchs Mehler Weiss & Fritzsche

(56) Entgegenhaltungen:
- DE-A- 10 141 628
- DE-A- 10 343 106
- DE-A- 19 721 565

## Beschreibung

Die Erfindung bezieht sich auf eine Vorrichtung zum Schutz von Personen bei einem Frontalaufprall auf ein Kraftfahrzeug, das eine Fronthaube aufweist, die frontseitig mindestens ein Haubenschloß besitzt, das einen an der Fronthaube befestigten, beweglichen Schließteil und einen karosseriefesten Schließteil aufweist, die in einem Grundzustand miteinander verriegelt sind, und die sensorgesteuert unter Aufstellen der Fronthaube um einen vorgegebenen Hub entriegelbar sind.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz durch eine im Kollisionsfall aktiv nachgiebig aufstellbarer Fronthaube, die windschutzscheibenseitig über eine Scharnieranordnung drehbar angeschlagen ist. Diese Schamieranordnung ist über einen schwenkbar oder verschiebbar gelagerten Scharnierträger so an der Karosserie des Vorderwagens befestigt, dass im Falle einer Kollision des Fahrzeuges mit einer Person die Fronthaube mittels einer an dem Schamierträger angreifenden energiespeichemder Einrichtung, z. B. einem Feder-Kraftspeicher, nach oben verschwenkt bzw. verschoben, d. h. angehoben werden kann. Dieser bekannten Konstruktion liegt der Gedanke zugrunde, die Schamieranordnung selbst mit dem angelenkten Scharnierträger gegenüber der Karosserie anzuheben, so dass es nicht notwendig ist, eine komplexe Entkoppeleinrichtung zwischen Scharnieranordnung und Fronthaube im Falle eines Aufpralles vorzusehen.

Die Lösungen nach dem vorgenannten Stand der Technik zur aktiven Fronthaube mit windschutzscheibenseitiger Anhebung der Fronthaube über den Schamierdrehanschlag sehen vor, dass das vordere Haubenschloss im geschlossenen Zustand verbleibt. Dadurch ist der Frontbereich der Fronthaube relativ steif und hart, was für den direkten ersten Kontakt zwischen dem Fahrzeug und der Unfallperson zu direkten Verletzungen führen kann, insbesondere im unteren Rumpfbereich der Unfallperson (Oberschenkel und Bauchbereich).

Um dies zu vermeiden, sind gemäß der DE 197 21 565 A1 und DE 101 08 880 A1 auch Konstruktionen für das sensorgesteuerte Aufstellen der Fronthaube im vorderen, d.h. frontseitigen HaubenSchlossbereich bekannt geworden. Die Konstruktion nach der erstgenannten DE 197 21 565 A1 mit einer zweistufigen Schlossöffnung beruht auf dem Prinzip, das Haubenschloss zunächst in der 1. Stufe zu entriegeln und dann die so entriegelte Fronthaube durch eine vorgespannte Feder um einen gewissen Hub aufzustellen, ohne dass das Schloss ganz geöffnet wird. Bei dieser bekannten Konstruktion ist einmal der Deformationsweg sehr begrenzt, und zum anderen ist die Federkraft der vorgespannten Feder relativ schwach.

Die Konstruktion nach der DE 101 08 880 A1 sieht als Aufstellelement eine Kolben-Zylinder-Einheit, aktivierbar durch eine pyrotechnische Treibladung vor, die sowohl zum Aufstellen der rückwärtigen Schamierträger als auch zum Aufstellen des vorderen Haubenschlosses dienen kann, wobei die Aufstellung des Haubenschlosses nicht näher dargestellt ist. Diese Lösung benötigt eine starre Verriegelung des aufgestellten Kolbens, welche die Deformationsfähigkeit des Systems stark einengt, da kein Federdeformationsweg gegeben ist.

Der Erfindung liegt die Aufgabe zugrunde, ausgehend von der eingangs bezeichneten Vorrichtung nach dem Prinzip der vorgenannten DE 197 21 565 diese so auszubilden, dass ein relativ weiter, energieabbauender Deformationsweg erzielbar ist.

Die Lösung dieser Aufgabe gelingt bei einer Vorrichtung zum Schutz von Personen bei einem Frontalaufprall auf ein Kraftfahrzeug, das eine Fronthaube aufweist, die frontseitig mindestens ein Haubenschloß besitzt, das einen an der Fronthaube befestigten, beweglichen Schließteil und einen karosseriefesten Schließteil aufweist, die in einem Grundzustand miteinander verriegelt sind, und die sensorgesteuert unter Aufstellen der Fronthaube um einen vorgegebenen Hub entriegelbar sind, gemäß der Erfindung dadurch, daß ein sensorgesteuert mittels eines Aktuators und einer Druckfeder aufstellbares längliches Hubelement vorgesehen ist, das in aufstellender Wirkverbindung mit dem beweglichen Schließteil und in selbsttätig entriegelnder Wirkverbindung mit dem karosseriefesten Schließteil steht.

Das aufstellbare Hubelement im Haubenschloß sorgt in Verbindung mit der Aufstell-Druckfeder dafür, daß ein relativ großer, gedämpfter und energieabsorbierender Deformationsweg zur Verfügung steht. Es ermöglicht mit Vorteil, anders als bei über Schlossträger insgesamt aufstellbaren Haubenschlössern, eine Krafteinleitung der Aufstellbewegung direkt in das mit der Fronthaube verbundene bewegliche Schließteil.

Weiterbildungen und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen wird die Erfindung näher erläutert.
Es zeigen:
- Fig. 1: in einer isometrischen Gesamt-Darstellung die erfindungsgemäße Vorrichtung zum Aufstellen der Fronthaube eines PKW im Haubenschloß-Bereich mit einem sensorgesteuert aufstellbaren Hubelement im Haubenschloß unter Einleitung der Aufstellkraft in den Schlossbügel an der Fronthaube,
- Fig. 2: ebenfalls in einer isometrischen Darstellung die Innenansicht der Vorrichtung nach Fig. 1 im Grundzustand,
- Fig. 3: in einer Längsschnitt-Darstellung die Aufstellvorrichtung im Grundzustand entsprechend Fig. 2,
- Fig. 4: in einer Längsschnitt-Darstellung die Innenansicht der Aufstellvorrichtung nach Fig. 2 bei Beginn einer Crash-Auslösung,
- Fig. 5: ebenfalls in einer Längsschnitt-Darstellung die Innenansicht der Aufstellvorrichtung nach Fig. 2 in der Crashstellung bei angehobener Fronthaube,
- Fig. 6: eine Draufsicht auf die Aufstellvorrichtung, und
- Fig. 7: eine Variante in der Ausbildung des Hubelementes im Wirkeingriffsbereich mit dem Schlossbügel der Fronthaube.

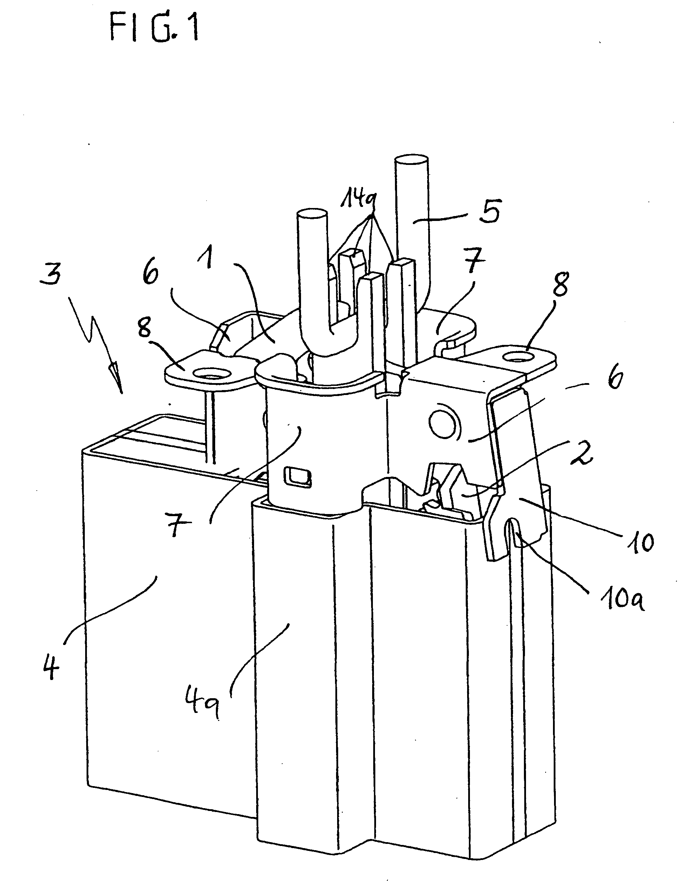

Die Fig. 1 zeigt in einer isometrischen Gesamt-Darstellung die erfindungsgemäße Vorrichtung zum Schutz von Personen bei einem Frontalaufprall auf ein Kraftfahrzeug durch sensorgesteuertes Aufstellen der Fronthaube des Kraftfahrzeuges im frontseitigen Haubenschlossbereich.

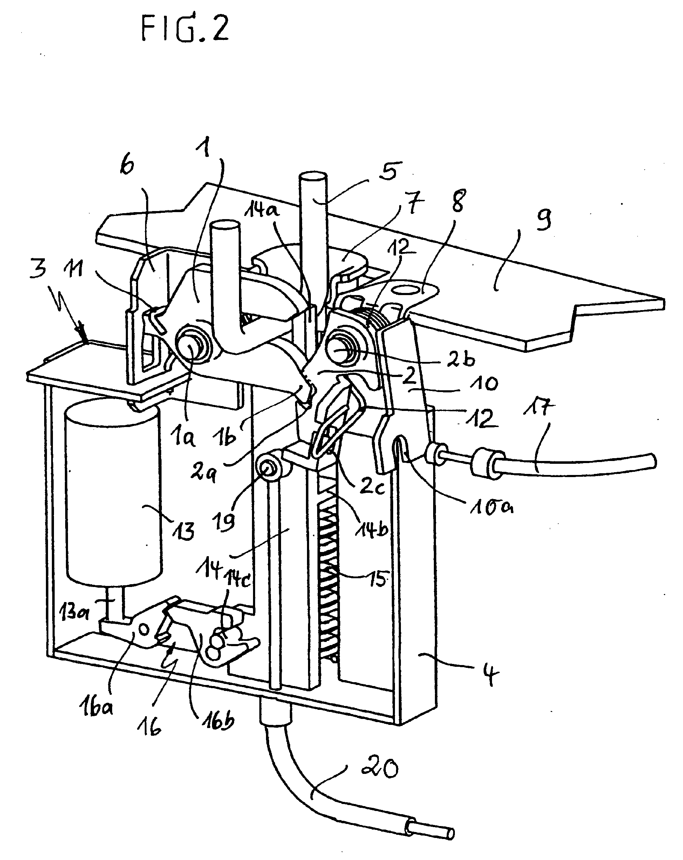

Das Haubenschloß, bestehend aus einer Drehfalle 1 und einer Sperrklinke 2 (Fig. 2), bildet mit der sensorgesteuerten Komponente zum Aufstellen der Fronthaube, der sogenannten Aktorik, eine Einheit, d.h. eine Baugruppe 3. Die weiteren Funktionselemente sind in einem Gehäuse 4 untergebracht. Die Drehfalle 1 steht im Schließzustand des Haubenschlosses im Wirkeingriff mit einem Schlossbügel 5, der fest an der Fronthaube (nicht dargestellt) angebracht ist, die ferner zur Begrenzung ihrer Aufstellbewegung beim Entriegeln des Schlosses mindestens einen manuell lösbaren Fanghaken aufweist (ebenfalls nicht dargestellt).

Am oberen Teil 6 des Gehäuses 1, in welchem die Drehfalle und die Sperrklinke 2 gelagert sind, sind ferner ein Schlosstrichter 7 zur besseren Einführung des Schlossbügels 5 in die Schließstellung sowie zwei Laschen 8 zum Befestigen des Gehäuses 1 im Fahrzeug-Vorderwagen 9, sei es am Frontmodul, an der Querbrücke oder an der Kühlerbrücke (Fig. 2) angebracht, vorzugsweise durch Verschrauben.

Am Gehäuse 1 ist ferner seitlich ein Stützblech 10 fest angebracht, das einen Einschnitt 10 a für die Aufnahme eines Bowdenzuges 17 zum üblichen manuellen Entriegeln des Haubenschlosses über die Sperrklinke 2 aufweist (Fig. 2).

Die Fig. 2 zeigt in einer ebenfalls isometrischen Darstellung bei weggebrochener vorderer Wand des Gehäuses 4 den inneren Aufbau des Schlosses und der Aktorik der Baugruppe 3 nach Fig. 1 in der Grundstellung, d.h. bei geschlossener Fronthaube.

Die um eine Achse 1 a drehbare Schlossfalle, die Drehfalle 1, die den Schlossbügel 5 in ihrer maulförmigen Öffnung formschlüssig aufnimmt, ist mittels einer Schenkelfeder 11 im öffnenden Sinne, d.h. gegen den Uhrzeigersinn vorgespannt. Sie besitzt eine Verriegelungsnase 1 b, die im Schließzustand formschlüssig in einem komplementären Einschnitt 2 a der Sperrklinke 2 aufgenommen ist. Die Sperrklinke 2, die drehbar um die Achse 2 b im Oberteil 6 des Gehäuses 1 angelenkt ist, ist durch eine Schenkelfeder 12 im verriegelnden Sinne, d.h. im Uhrzeigersinn drehend, vorgespannt. Diese Schenkelfeder 12 sorgt im Grundzustand für einen sicheren Formschluß zwischen der Verriegelungsnase 1 b an der Drehfalle 1 und dem komplementären Einschnitt 2 a an der Sperrklinke 2, d.h. für eine sichere Verriegelung der Fronthaube im Haubenschloß. An der Sperrklinke 2 ist ein weiterer Einschnitt 2 c ausgebildet, der typischerweise den Kopf des Bowdenzuges 17, gestützt durch den Einschnitt 10 a im Stützblech 10, aufnimmt, dessen anderes Ende mit einem Entriegelungshebel, der typischerweise unter dem Armaturenbrett des Kraftfahrzeuges angebracht ist, verbunden ist. Durch Betätigen dieses Entriegelungshebels kann das Haubenschloß auf übliche Weise manuell entriegelt und nach Lösen der Fanghaken in die sogenannte Servicestellung gebracht werden.

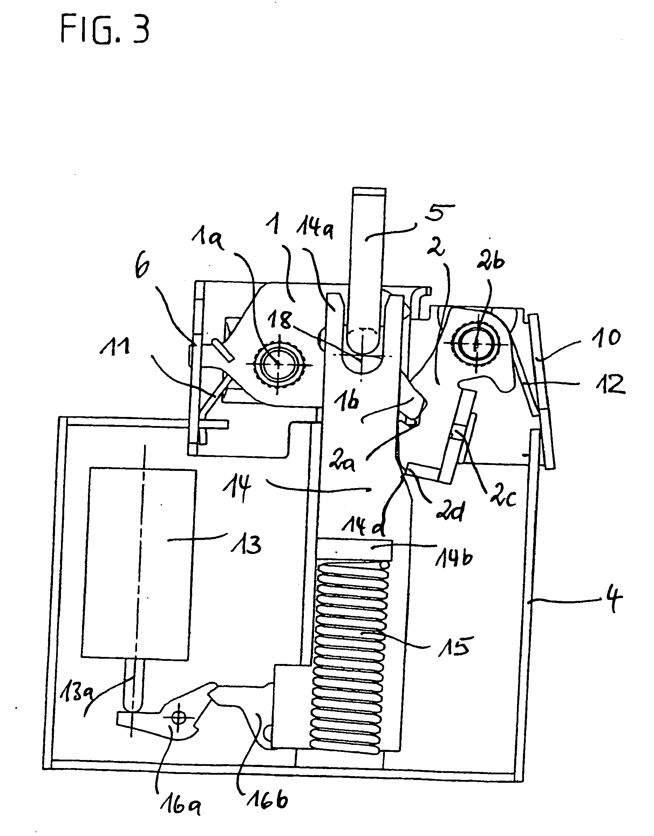

Um das Haubenschloß im Falle eines drohenden Zusammenpralls mit einer Person sensorgesteuert zu öffnen, ist das Haubenschloß mit einem sensoraktivierten Hubelement kombiniert. Die entsprechenden Komponenten sind im Gehäuse 4 untergebracht. Sie bestehen einmal aus einem sensorbetätigbaren Aktuator 13, der durch einen Auslösemagneten oder ein pyrotechnisches Element gebildet sein kann, ferner aus einem länglichen Hubelement 14, das kopfseitig vier beabstandete zapfenartige Fortsätze 14 a zur U-förmigen Aufnahme des Schlossbügels 5 besitzt, wie insbesondere die Figuren 1 und 3 zeigen, und durch eine vorgespannte Druckfeder 15, die sich einmal am Gehäuseboden und zum anderen an einer Schulter 14 b des Hubelementes abstützt, aufstellbar ist, sowie das bodenseitig einen Haltezapfen 14 c aufweist. Ferner ist eine Halte-Auslösemechanik 16, hier dargestellt durch eine bekannte Doppelklinken-Mechanik aus zwei drehbar angelenkten, federvorgespannten Hebeln oder Drehklinken 16 a, 16 b, vorgesehen, die im dargestellten Grundzustand das Hubelement 14 gegen die Kraft der vorgespannten Druckfeder 15 niederhält. Wird der Aktuator 13 durch einen entsprechenden Sensor aktiviert, wird der Hebel 16 a durch einen ausgestoßenen Stößel 13 a gegen den Uhrzeigersinn verschwenkt und gibt den Hebel 16 b frei, der ebenfalls gegen den Uhrzeigersinn schwenkt und dadurch den Haltezapfen 14 c freigibt, so daß die Druckfeder 15 das Hubelement 14 aufstellen kann.

Es versteht sich, daß auch andere bekannte Halte- und Auslösemechanismen, wie Kugelschloß oder dergleichen möglich sind.

Ein derartiger kompakter Aufsteller mit vertikaler, axialparalleler Anordnung von Aktuator und Hubelement ist Gegenstand der älteren deutschen Patentanmeldung 103 26 404 vom 12.6.2003, deren Offenbarungsinhalt durch Bezugnahme mit zum Offenbarungsinhalt der vorliegenden Anmeldung gemacht wird.

Wie die Fig. 3 erkennen lässt, liegt der Schlossbügel 5 im Grundzustand nicht unmittelbar an der U-förmigen Senke zwischen den zapfenartigen Fortsätzen 14 a des länglichen Hubelementes 14, sondern es befindet sich ein Freiraum 18 dazwischen, der beim Aufstellen des Hubelementes einen gewissen Steuerhub für das Entriegeln des Haubenschlosses nach sensorgesteuerter Auslösung des Aktuators und Freigabe des Hubelementes 14 ermöglicht. Um dieses Entriegeln beim Aufstellen des Hubelementes steuerungstechnisch durchzuführen, ist am Hubelement ein keilförmiger Bereich 14 d angeformt, der als Keilstößel in Wirkeingriff mit einem Anschlag 2 d an der Sperrklinke 2 in Wirkeingriff treten kann.

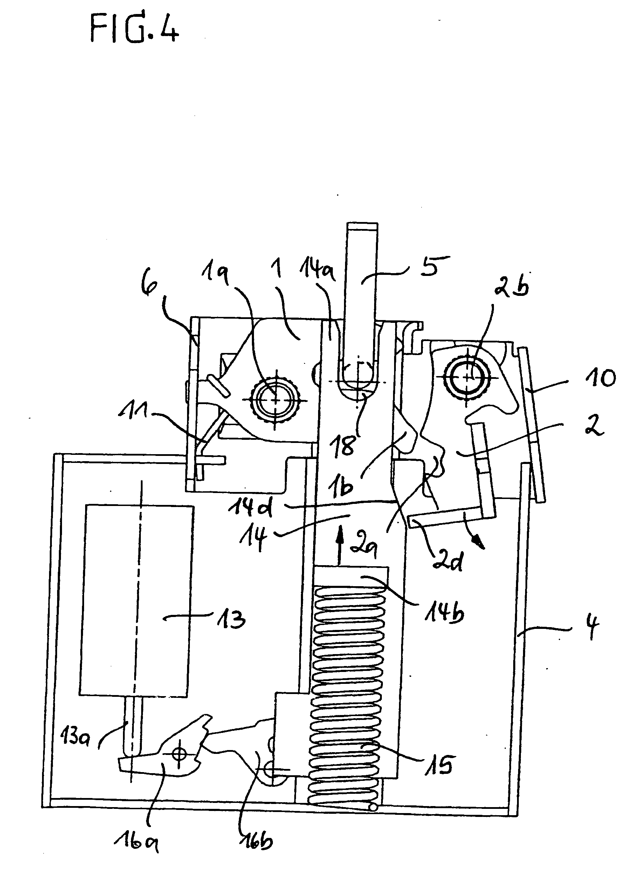

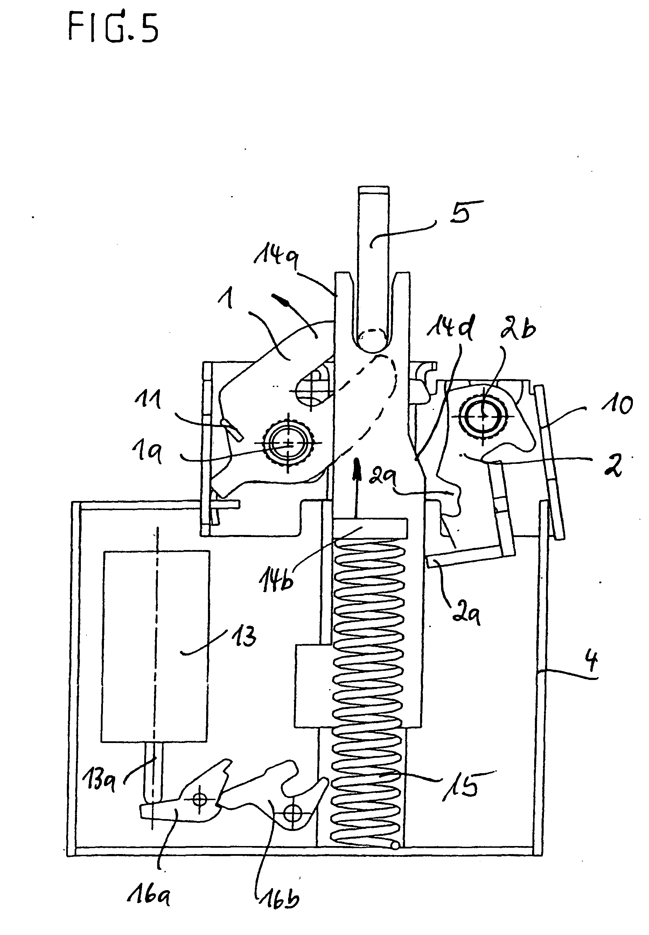

Nach Auslösen der Halte- und Auslösemechanik 16 beginnt die Druckfeder 15 das Hubelement aufzustellen. Die Fig. 4 zeigt dabei anhand der Stellung der Hebel 16 a, 16 b den Beginn dieser Aufstellbewegung. Dabei drückt der Keilstößel 14 d den Anschlag 2 d nach außen weg unter Verschwenkung der Sperrklinke 2 gegen den Uhrzeigersinn, bis der Formschluß zwischen der Verriegelungsnase 1 b und dem Einschnitt 2 a an der Sperrklinke 2 aufgehoben ist. Bis zur vollständigen Öffnung der Sperrklinke verbleibt dabei immer noch ein gewisser Freiraum zum Schlossbügel. Die Schenkelfeder 11 kann dann die Schlossfalle 1 im öffnenden Sinne verdrehen. Dadurch kann die Druckfeder 15 das Hubelement 14, das den Freiraum 18 dann überwunden hat, zusammen mit dem Schlossbügel 5, d.h. die Fronthaube, um einen gewissen Arbeitshub aufstellen. Dieser aufgestellte Zustand ist in Fig. 5 dargestellt. Nicht gezeigte Fanghaken verhindern dabei, daß die Fronthaube auffliegen kann, d.h. verhindern einen Überhub.

In der aufgestellten Position erhält der Schlossbügel 5 durch die U-förmige Umgreifung des Hubelementes noch eine gewisse Stabilität, bzw. vermag auch eine gewisse Kraft bei Belastung in +X-Richtung aufzunehmen. Etwaig auftretende Kräfte beim Schließen der Fronthaube werden nur über die fahrzeugfest gelagerte Schloß-Drehfalle 1 und Sperrklinke 2 aufgenommen und nicht an die Halte- und Auslösemechanik 16 übertragen.

Dadurch, daß das Hubelement 14 mit der Druckfeder 15 im aufgestellten Zustand eine Art federelastische Deformationszone bildet, und damit der Frontbereich weniger hart bzw. steif ist, kann die Gefahr von schweren Verletzungen bei einem Aufprall von Personen signifikant verringert werden.

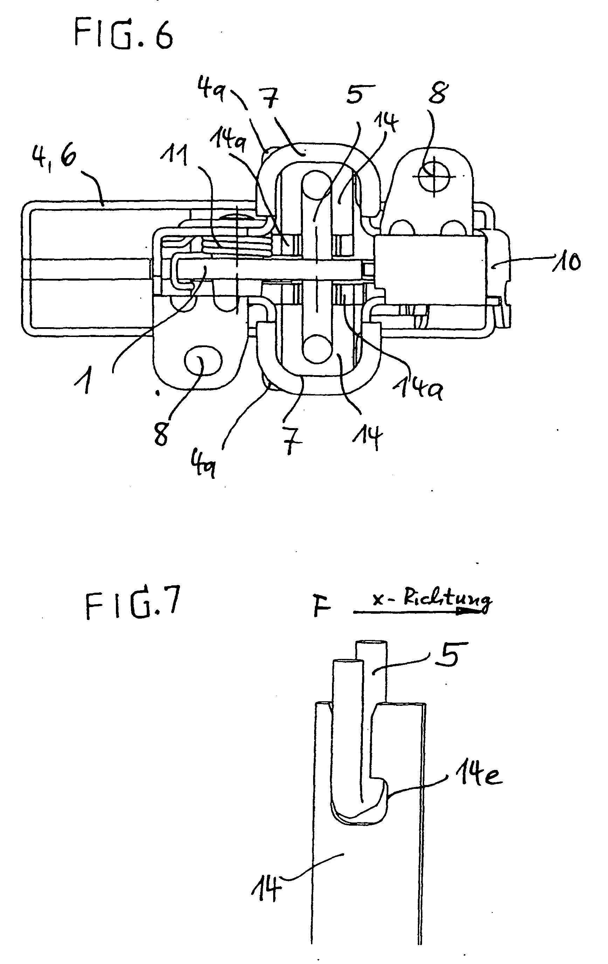

Das Hubelement 14 ist, wie auch die Querschnitt-Ansicht nach Fig. 6 zeigt, ein plattenartiger Körper, der links und rechts neben der Schloß-Drehfalle 1 in ausgebogenen Gehäusebereichen 4 a (Fig. 1) linear geführt ist und sowohl links als auch rechts Schultern 14 b mit zugehörigen Aufstellfedern 15 aufweist. In den Figuren 3 - 5 sind der besseren Übersicht halber nur eine Schulter und eine Druckfeder dargestellt. Prinzipiell ist auch ein einseitig geführtes Hubelement und eine Aufstell-Druckfeder möglich.

Die Fig. 7 zeigt eine alternative technische Ausführung des U-förmigen Bereiches am Hubelement, der eine Aussparung 14 e, die auch als Hinterschnitt ausgeführt werden kann, besitzt, welche bei Einleitung einer Kraft F in X-Richtung dem Schlossbügel einen zusätzlichen Formschluß gibt.

Bei einer ungewollten Auslösung sollte die Fronthaube reversiert werden, d.h. das Hubenschloß wieder verriegelt werden. Dazu muß das Hubelement 14 durch eine manuell betätigbare Mechanik nach unten gezogen oder gedrückt werden, bis die Verriegelungsnase 1 b an der Schloß-Drehfalle 1 wieder in dem Einschnitt 2 a an der Sperrklinke 2 einrastet und auch die Halte- und Auslösemechanik 16 mit ihren Drehklinken 16 a, 16 b in die "Scharfstellung" gebracht wird. Bei einer auf Zug angelegten Mechanik wird vorzugsweise ein Bowdenzug 20 (Fig. 2) verwendet, der über einen großen Hebelarm wie Fronthaube, Tür etc. gezogen wird, um die relativ hohe Federkraft der Feder 15 zu überwinden., und der in einer Aufnahme 19 am Hubelement 14 eingehängt ist.

Gegenüber Aufstellvorrichtungen mit Aufstellung des gesamten Schlosses im verriegelten Zustand über einen aufstellbaren Schlossträger hat die erfindungsgemäße Aufstellvorrichtung mit dem aufstellbaren Hubelement im Schloß folgende Vorteile:
- Das Haubenschloß kann direkt im Frontmodul an der Querbrücke befestigt werden
- Der übliche Bowdenzug zum manuellen Entriegeln des Haubenschlosses und elektrische Anschlüsse, z.B. der elektronischen Diebstahl-Warnanlage, die auch die Fronthaube gegen Aufbrechen absichern soll (EDW-Schalter) werden bei der Aufstellbewegung nicht mitbewegt
- Es entsteht eine kompakte Baueinheit mit gut beherrschbaren Toleranzen
- Haubenschlosskräfte werden nicht in die Halte-Auslösemechanik des Hubelementes eingeleitet, sondern verbleiben im Schloß
- Ein Spiel im Aktuator hat keinen Einfluß auf das Haubenspiel.

Es sind Ausführungen der "aktiven Motorhaube" möglich, bei denen nicht nur eine Aufstellung im frontseitigen Schlossbereich erfolgt, sondern bei der zusätzlich die Scharniere der Fronthaube aufstellbar sind, z.B. durch eine Vorrichtung nach der älteren deutschen Patentanmeldung 102 43 497.2, bestehend aus einem Schamierträger für die mittelbare karosserieseitige Anlenkung, der aufstellbar an der Karosse des Vorderwagens angebracht ist, und aus einer an dem Scharnierträger angreifenden energiespeichemden Einrichtung in Form einer Federspeicher-Anordnung sowie aus einer sensorgesteuerten Haltevorrichtung für einen Wirkeingriff mit dem Schamierträger.

### Bezugszeichenliste

- 1.: Drehfalle
- 1 a: Drehachse
- 1 b: Verriegelungsnase
- 2: Sperrklinke
- 2 a: Einschnitt
- 2 b: Drehachse
- 2 c: Einschnitt
- 2 d: Anschlag
- 3: Baugruppe
- 4: Gehäuse
- 4 a: Führungen
- 5: Schloßbügel
- 6: oberes Gehäuseteil
- 7: Schloßtrichter
- 8: Befestigungslaschen
- 9: Fahrzeug-Vorderwagen
- 10: Stützblech
- 10 a: Einschnitt am Stützblech
- 11: Schenkelfeder
- 12: "
- 13: Aktuator
- 13 a: Stößel
- 14: Hubelement
- 14 a: Zapfenartige Fortsätze
- 14 b: Schulter
- 14 c: Haltezapfen
- 14 d: Keilstößel
- 14 e: Aussparung
- 15: Druckfeder
- 16: Halte-Auslösemechanik
- 16 a: Hebel
- 16 b: Hebel
- 17: Entriegelungs-Bowdenzug
- 18: Freiraum
- 19: Aufnahme
- 20: Reversier-Bowdenzug

## Patentansprüche

1. Vorrichtung zum Schutz von Personen bei einem Frontalaufprall auf ein Kraftfahrzeug, das eine Fronthaube aufweist, die frontseitig mindestens ein Haubenschloß besitzt, das einen an der Fronthaube befestigten, beweglichen Schließteil (5) und einen karosseriefesten Schließteil (1, 2) aufweist, die in einem Grundzustand miteinander verriegelt sind, und die sensorgesteuert unter Aufstellen der Fronthaube um einen vorgegebenen Hub entriegelbar sind, **dadurch gekennzeichnet, daß** ein sensorgesteuert mittels eines Aktuators (13) und einer Druckfeder (15) linear aufstellbares längliches Hubelement (14) vorgesehen ist, das in aufstellender Wirkverbindung mit dem beweglichen Schließteil (5) und in selbsttätig entriegelnder Wirkverbindung mit dem karosseriefesten Schließteil (1, 2) steht.

2. Vorrichtung nach Anspruch 1, **dadurch gekennzeichnet, daß** das an der Fronthaube befestigte bewegliche Schließteil des Haubenschlosses aus einen Schlossbügel (5) und das karosseriefeste Schließteil aus einer karosseriefest drehbar angelenkten, im entriegelnden Sinne federvorgespannten Schloß-Drehfalle (1) in Verbindung mit einer karosseriefest angelenkten, im Verriegelungssinn federvorgespannten Sperrklinke (2), die in einen lösbaren sperrenden formschlüssigen Wirkeingriff mit der Schloß-Drehfalle (1) bringbar ist, besteht, und daß das Hubelement (14) kopfseitig zapfenartige Fortsätze (14 a) mit einer U-förmigen Senke zur teilformschlüssigen Aufnahme des Schlossbügels (5) sowie ein Steuerelement (14 d) zum selbsttätigen Entriegeln der Wirkverbindung zwischen Schloß-Drehfalle (1) und Sperrklinke (2) beim Aufstellen des Hubelementes besitzt.

3. Vorrichtung nach Anspruch 2, **dadurch gekennzeichnet, daß** die zapfenartigen Fortsätze (14 a) eine Aussparung (14 e) für einen zusätzlichen Formschluß mit dem Schlossbügel (5) bei einer Kraftbelastung in Richtung der Fahrzeuglängsachse (X-Achse) besitzen.

4. Vorrichtung nach Anspruch 2 oder 3, **dadurch gekennzeichnet, daß** im Grundzustand der Vorrichtung zwischen der U-förmigen Senke und dem Schlossbügel (5) ein Freiraum (18) besteht, der so bemessen ist, daß beim Aufstellen des Hubelementes (14) vor dem Anschlag der Senke am Schlossbügel (5) das Steuerelement (14 d) am Hubelement die Sperrklinke (2) von der Schloß-Drehfalle (1) entriegelt hat.

5. Vorrichtung nach einem der Ansprüche 2 bis 4, **dadurch gekennzeichnet, daß** das Steuerelement (14d) am Hubelement (14) zum selbsttätigen Entriegeln der Wirkverbindung zwischen Sperrklinke (2) und Schloß-Drehfalle (1) durch eine Keilfläche (14 d) gebildet ist, die in Wirkverbindung mit einem Anschlag (2 d) an der Sperrklinke (2) steht.

6. Vorrichtung nach einem der Ansprüche 1 bis 5, **dadurch gekennzeichnet, daß** der Aktuator (13) und das längliche Hubelement (14) sowie die Druckfeder (15) axial parallel zueinander kompakt in einem Gehäuse (4) angeordnet sind, das ein Oberteil (6) besitzt, in welchem das karosseriefeste Schließteil (1, 2) angebracht ist.

7. Vorrichtung nach Anspruch 6, **dadurch gekennzeichnet, daß** das Gehäuse (4) Führungen (4 a) zum Führen des länglichen Hubelementes (14) bei seiner Aufstellung besitzt.

8. Vorrichtung nach Anspruch 6 oder 7, **dadurch gekennzeichnet, daß** am Gehäuse-Oberteil (6) ein Schlosstrichter (7) als Einführhilfe für das bewegliche Schließteil (5) ausgebildet ist.

9. Vorrichtung nach einem der Ansprüche 1 bis 8, **dadurch gekennzeichnet, daß** am karosseriefesten Schließteil (1, 2) eine Aufnahme (2 c) für einen Bowdenzug (17) zum manuellen Entriegeln des geschlossenen Haubenschlosses ausgebildet ist.

10. Vorrichtung nach einem der Ansprüche 1 bis 9, **dadurch gekennzeichnet, daß** am Hubelement (14) eine Aufnahme (19) für einen Bowdenzug (20) zum Reversieren des aufgestellten Hubelementes ausgebildet ist

## Claims

1. Device for protecting pedestrians in a frontal collision with a vehicle which has a front bonnet which has, at the front end, at least one bonnet lock which has a moveable locking part (5) fastened to the front bonnet and a locking part (1, 2) fixed on the body, which locking parts are locked to each other in a basic state, and which can be unlocked under the control of a sensor by the front bonnet being raised by a predetermined amount of lift, **characterized in that** an elongate lifting element (14) is provided which can be raised linearly under sensor control by means of an actuator (13) and a compression spring (15) and is in raising operative connection to the moveable locking part (5) and is in automatically unlocking operative connection to the locking part (1, 2) fixed on the body.

2. Device according to Claim 1, **characterized in that** the moveable locking part of the bonnet lock, which locking part is fastened to the front bonnet, comprises a lock shackle (5), and the locking part which is fixed on the body comprises a rotary lock latch (1), which is articulated rotatably in a manner fixed on the body and is spring-prestressed in the unlocking direction, in conjunction with a catch (2), which is articulated in a manner fixed on the body, is spring-prestressed in the locking direction and can be brought into a releasable, locking, interlocking operative engagement with the rotary lock latch (1), and **in that** the lifting element (14) has pin-like extensions (14a) at the head end with a U-shaped depression for the partial interlocking reception of the lock shackle (5) and a control element (14d) for automatically unlocking the operative connection between rotary lock latch (1) and catch (2) during the raising of the lifting element.

3. Device according to Claim 2, **characterized in that** the pin-like extensions (14a) have a cutout (14e) for an additional interlocking connection with the lock shackle (5) when subjected to a loading of a force in the direction of the longitudinal axis of the vehicle (X-axis).

4. Device according to Claim 2 or 3, **characterized in that**, in the basic state of the device, there is a clearance (18) between the U-shaped depression and the lock shackle (5), which clearance is dimensioned in such a manner that, during the raising of the lifting element (14), before the depression strikes against the lock shackle (5) the control element (14d) on the lifting element has unlocked the catch (2) from the rotary lock latch (1).

5. Device according to one of Claims 2 to 4, **characterized in that** the control element (14d) on the lifting element (14) with the automatic unlocking of the operative connection between catch (2) and rotary lock latch (1) is formed by a wedge surface (14d) which is in operative connection with a stop (2d) on the catch (2).

6. Device according to one of Claims 1 to 5, **characterized in that** the actuator (13) and the elongate lifting element (14) and the compression spring (15) are arranged axially parallel to one another in a compact manner in a housing (4) which has an upper part (6) in which the locking part (1, 2) which is fixed on the body is fitted.

7. Device according to Claim 6, **characterized in that** the housing (4) has guides (4a) for guiding the elongate lifting element (14) as it is being raised.

8. Device according to Claim 6 or 7, **characterized in that** a lock funnel (17) is formed on the housing upper part (6) as an introducing aid for the moveable locking part (5).

9. Device according to one of Claims 1 to 8, **characterized in that** a receptacle (2c) for a Bowden cable (17) for the manual release of the closed bonnet lock is formed on the locking part (1, 2) fixed on the body.

10. Device according to one of Claims 1 to 9, **characterized in that** a receptacle (19) for a Bowden cable (20) for reversing the raised lifting element is formed on the lifting element (14).

## Revendications

1. Dispositif pour la protection de personnes en cas de choc frontal avec un véhicule automobile qui présente un capot avant qui dispose à l'avant d'au moins un verrou de capot qui présente une pièce de fermeture (5) mobile fixée au capot avant et une pièce de fermeture (1, 2) solidaire de la carrosserie, lesquelles sont verrouillées ensemble en position de base et lesquelles, via un capteur, sont déverrouillables d'un course prédéterminée pendant le relèvement du capot avant, **caractérisé en ce qu'**on a prévu un élément de course (14) allongé, piloté par un capteur et pouvant se relever linéairement au moyen d'un actionneur (13) et d'un ressort de compression (15), lequel élément de course se trouve en liaison active de relèvement avec la pièce de fermeture (5) mobile et en liaison active se déverrouillant automatiquement avec la pièce de fermeture (1, 2) solidaire de la carrosserie.

2. Dispositif selon la revendication 1, **caractérisé en ce que** la pièce de fermeture mobile du verrou de capot, fixée sur le capot avant, se compose d'un étrier de fermeture (5), et la pièce de fermeture solidaire de la carrosserie se compose d'un loquet de verrou rotatif (1) articulé à la carrosserie de manière à pouvoir pivoter et précontraint par ressort dans le sens du déverrouillage en conjonction avec un cliquet d'arrêt (2) précontraint par ressort dans le sens de verrouillage, lequel peut être amené en liaison active par forme se bloquant de manière amovible avec le loquet de verrou rotatif (1), et **en ce que** l'élément de course (14) possède, côté tête, des prolongements (14a) à tenon avec une encoche en U afin d'accueillir l'étrier de verrou (5) par une liaison partielle par forme, ainsi qu'un élément de commande (14d) pour déverrouiller automatiquement la liaison active entre le loquet rotatif de verrou (1) et le cliquet d'arrêt (2) lors du relèvement de l'élément de course.

3. Dispositif selon la revendication 2, **caractérisé en ce que** les prolongements à tenon (14a) possèdent un évidement (14e) pour une liaison par forme supplémentaire avec l'étrier de verrou (5) en cas d'effort dans le sens longitudinal du véhicule (axe X).

4. Dispositif selon la revendication 2 ou 3, **caractérisé en ce que**, dans la position de base du dispositif, il y a, entre l'encoche en U et l'étrier de verrou (5), un espace libre (18) dont la dimension est telle que, lors du relèvement de l'élément de course (14) avant la butée de l'encoche sur l'étrier de verrou (5), l'élément de commande (14d) sur l'élément de course a déverrouillé le cliquet d'arrêt (2) du loquet de verrou rotatif (1).

5. Dispositif selon l'une quelconque des revendications 2 à 4, **caractérisé en ce que** l'élément de commande (14d) sur l'élément de course (14) est conçu pour le déverrouillage automatique de la liaison active entre le cliquet d'arrêt (2) et le loquet de verrou rotatif (1) grâce à une surface en pente (14d), laquelle se trouve en liaison active avec une butée (2d) sur le cliquet d'arrêt (2).

6. Dispositif selon l'une quelconque des revendications 1 à 5, **caractérisé en ce que** l'actionneur (13) et l'élément de course (14) allongé ainsi que le ressort de compression (15) sont disposés axialement parallèlement les uns aux autres de manière compacte dans un boîtier (4) qui comporte une partie supérieure (6) dans laquelle est posée la pièce de fermeture (1, 2) solidaire de la carrosserie.

7. Dispositif selon la revendication 6, **caractérisé en ce que** le boîtier (4) dispose de guidages (4a) servant à guider l'élément de course (14) allongé lors de son relèvement.

8. Dispositif selon la revendication 6 ou 7, **caractérisé en ce qu'**une entrée de verrou (7) est réalisée comme aide à l'introduction de la pièce de fermeture (5) mobile dans la partie supérieure (6) du boîtier.

9. Dispositif selon l'une quelconque des revendications 1 à 8, **caractérisé en ce qu'**un logement (2c) pour un câble de commande (17) est réalisé sur la pièce de fermeture (1, 2) solidaire de la carrosserie afin de déverrouiller manuellement le verrou de capot fermé.

10. Dispositif selon l'une quelconque des revendications 1 à 9, **caractérisé en ce qu'**un logement (19) pour un câble de commande (20) est réalisé sur l'élément de course (14) afin d'inverser l'élément de course qui s'est relevé.
